(19) Europäisches Patentamt
European Patent Office
Office européen des brevets

(11) Numéro de publication: **0 069 643**
**B1**

(12) **FASCICULE DE BREVET EUROPEEN**

(45) Date de publication du fascicule du brevet: **24.09.86**

(51) Int. Cl.$^4$: **C 01 B 25/41**

(21) Numéro de dépôt: **82401184.5**

(22) Date de dépôt: **28.06.82**

(54) **Nouveau tripolyphosphate de sodium, procédé pour l'obtenir et applications.**

(30) Priorité: **06.07.81 FR 8113221**

(43) Date de publication de la demande:
**12.01.83 Bulletin 83/02**

(45) Mention de la délivrance du brevet:
**24.09.86 Bulletin 86/39**

(84) Etats contractants désignés:
**AT BE CH DE FR GB IT LI LU NL SE**

(56) Documents cités:
**FR-A-2 020 000**
**FR-A-2 193 778**
**FR-A-2 257 326**
**FR-A-2 431 321**

(73) Titulaire: **RHONE-POULENC CHIMIE DE BASE**
**25, quai Paul Doumer**
**F-92408 Courbevoie (FR)**

(72) Inventeur: **Bourgeois, Jean-Paul**
**17 Villa du Petit Parc**
**F-94000 Creteil (FR)**
Inventeur: **Couffin, Frédéric**
**8bis rue Pierre Corneille**
**F-91230 Montgeron (FR)**
Inventeur: **Magnier, Claude**
**3, rue des Chaufourniers**
**F-75019 Paris (FR)**

(74) Mandataire: **Martin, Henri et al**
**RHONE-POULENC INTERSERVICES Service**
**Brevets Chimie 25, quai Paul Doumer**
**F-92408 Courbevoie Cédex (FR)**

**Le dossier contient des informations techniques présentées postérieurement au dépôt de la demande et ne figurant pas dans le présent fascicule.**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

**EP 0 069 643 B1**

Courier Press, Leamington Spa, England.

**Description**

La présente invention a pour objet un nouveau tripolyphosphate de sodium, un procédé pour son obtention et ses applications, notamment dans le domaine de l'industrie alimentaire et la détergence.

On sait que le tripolyphosphate de sodium correspond à la formule générale $Na_5P_3O_{10}$, mais l'apparente simplicité de la formule recouvre une réalité plus complexe.

En effet, le tripolyphosphate est obtenu théoriquement à partir d'une solution d'orthophosphates mono et disodique en ajustant le rapport Na/P à la valeur adéquate de 1,667 selon un schéma que l'on peut représenter comme suit:

$$\underset{\text{solution}}{NaH_2\ PO_4+2\ Na_2\ HPO_4}\xrightarrow{\text{traitement thermique}}Na_5P_3O_{10}+2H_2O$$

mais en réalité, l'on se trouve devant un grand nombre de réactions possibles selon plusieurs équilibres que l'on à résumé ci-après sans prétendre ni que toutes ces réactions se réalisant même en partie, ni qui cet énoncé soit exhaustif.

(a) $NaH_2PO_4+2\ Na_2HPO_4\rightarrow Na_5P_3O_{10}+2\ H_2O$

(b) $2\ NaH_2PO_4\rightarrow Na_2H_2P_2O_7+H_2O$

$4\ Na_2HPO_4\rightarrow 2\ Na_4P_2O_7+2\ H_2O$

$Na_2H_2P_2O_7+2\ Na_4P_2O_7\rightarrow 2\ Na_5P_3O_{10}+H_2O$

(c)1 $2\ (NaH_2PO_4,\ Na_2HPO_4)\rightarrow Na_2H_2P_2O_7+Na_4P_2O_7+2\ H_2O$

$2\ Na_2HPO_4\rightarrow Na_4P_2O_7+H_2O$

$Na_2H_2P_2O_7+2\ Na_4P_2O_7\rightarrow 2\ Na_5P_3O_{10}+H_2O$

(c)2 $2\ Na_3H_3(PO_4)_2\rightarrow 2\ Na_3HP_2O_7+2\ H_2O$

$2\ Na_2HPO_4\rightarrow Na_4P_2O_7+H_2O$

$2\ Na_3HP_2O_7+Na_4P_2O_7\rightarrow 2\ Na_5P_3O_{10}+H_2O$

(d) $2\ NaH_2PO_4\rightarrow Na_2H_2P_2O_7+H_2O$

$$Na_2H_2P_2O_7\rightarrow\ldots\rightarrow\frac{2}{n}(NaPO_3)_n+H_2O$$

$4\ Na_2HPO_4\rightarrow 2\ Na_4P_2O_7+2\ H_2O$

$$2\ Na_4P_2O_7+\frac{2}{n}(NaPO_3)_n\rightarrow 2\ Na_5P_3O_{10}$$

(e) $2\ NaH_2PO_4\rightarrow Na_2H_2P_2O_7+H_2O$

$4\ Na_2HPO_4+Na_2H_2P_2O_7\rightarrow 2\ Na_5P_3O_{10}+3\ H_2O$

(f) $2\ Na_3H_3(PO_4)_2\rightarrow 2\ Na_3HP_2O_7+\ H_2O$

$2\ Na_3HP_2O_7\rightarrow Na_6P_4O_{13}+H_2O$

$2\ Na_2HPO_4\rightarrow Na_4P_2O_7+H_2O$

$Na_6P_4O_{13}+Na_4P_2O_7\rightarrow 2\ Na_5P_3O_{10}$

L'on peut retenir de manière simplifiée que l'on peut obtenir, à côté du tripolyphosphate voulu, des polyphosphates à chaînes courtes (solubles) ou longues (insolubles) et des pyrophosphates de sodium.

La solution de départ peut être fabriquée par neutralisation de $H_3PO_4$ par NaOH ou par mélange

d'orthophosphates $NaH_2PO_4+2Na_2HPO_3$. Cette solution est ensuite généralement traitée thermiquement par des procédés connus: atomisation, four tournant, lit fluide ou flamme en une étape (ou deux étapes si on sépare l'orthophosphate intermédiaire). On obtient suivant les conditions de la thermocondensation (température, pression partielle d'eau, rapport Na/P, impuretés) des TPP 100 % phase I, 100 % phase II ou un mélange de phases I et II.

On connaît d'après le FR—A—2 193 778, des granulés de TPP de rapport Na/P égal à 1,667, pratiquement anhydres, ne prenant pas en masse à l'hydration.

Il est connu pour certaines applications, notamment dans le domaine de l'industrie alimentaire et de la détergence que la mise en solution du TPP en milieu non ou mal agité conduit en général à des blocs difficilement solubilisables ou à des prises en masse. Ainsi les phases I et II anhydre donnent des prises partielles.

La phase II hydratée conduit à une prise totale et instantenée, alors que la phase I hydratée n'entraine aucune prise. Un TPP possédant une bonne solubilisation est donc un TPP contenant au moins 40% de phase I et *préhydraté* (d'après le test décrit ci-dessous).

La préhydration peut être créée par pulvérisation d'eau après synthèse ou par fixation naturelle d'eau atmosphérique. Le taux de préhydratation nécessaire à une mise en solution sans prise en masse en milieu non agité est d'au moins 0,6% mesuré par une perte à 150°C.

Or, la Demanderesse a trouvé un nouveau tripolyphosphate de sodium de rapport Na/P égal à 1,667±0,01 de perte d'eau à 150°C inférieure à 0,6% et de préférence à 0,02 % et qui se caractérisé par le fait qu'il présente une prise en masse nulle en milieu non agité, selon la test ci-après.

Test

7g de TPP sont ajoutés rapidement (2 s) dans 20 ml d'eau distillée. On note l'aspect et la dureté du dépôt de TPP non dissout 2, 5, 10 et 20 mn après l'ajout. La prise peut être nulle, partielle ou totale et se déclencher plus ou moins rapidement.

Ce produit est d'autant plus surprenant que la solubilisation est observée quels que soit le taux de phase I et la granulométrie du produit et ceci malgré une perte en eau à 150°C inférieure à 0,6%.

Chimiquement, le rapport Na/P est de 1.667±0,01.

Il peut présenter un taux de phase et de phase II variable.

Selon la présente invention, le TPP présente en ou tic une densité apparente de 0,5 à 1,1, une taille des agglomérats inférieure à 100 µm et de préférence comprise entre 90 à 60 µm et un taux de phase I compris entre 15 et 60% et ne présente pas d'insolubles.

Le produit selon l'invention peut être notamment obtenu en mettant en oeuvre un procédé selon lequel:

— on prépare une solution de phosphates alcalins de rapport Na/P compris entre 1,64 et 1,70, en ajustant le rapport à la valeur du rapport Na/P dans le produit final,
— on forme un écoulement puits-tourbillon symétrique avec une phase gazeuse chaude et l'on introduit la solution selon l'axe dudit écoulement dans la zone de dépression de ce dernier,
— on impartit audit écoulement puits-tourbillon symétrique une quantité de mouvement par rapport à la quantité de mouvement de la phase liquide, suffisante pour provoquer la dispersion et le transfert thermique, dans une zone piston,
— on confère à la phase gazeuse une température suffisante pour créer une zone isotherme à la sortie de la zone piston, où a lieu pratiquement tout le transfert thermique entre phases dans la zone d'avancement piston, créée par l'écoulement puits,
— on laisse la réaction se poursuivre dans ladite zone isothermique,
— on recueille le produit obtenu,

le rapport des quantités de mouvement entre les phases gauzeuse et liquide étant compris entre 1000 et 10 000, les valeurs d'introduction de la solution de départ étant inférieures à 10 m/sec et ladite solution comprenant entre 15 et 50 % d'extrait sec, la pression sur la phase gazeuse étant comprise entre 0,4 et 0,6 $10^5$ Pa et la température dans la zone isotherme étant comprise dans l'intervalle 380—450°C.

De préférence, la solution de départ est obtenue par neutralisation de $H_3PO_4$ par Na OH.

Le procédé selon l'invention peut être mis en oeuvre dans un dispositif selon les brevets français 2 257 326, 2 419 754 et 2 431 321.

On peut également réaliser une prédispersion et/ou un traitement chimique simultanés.

Le produit selon l'invention peut trouver des applications notamment dans le domaine alimentaire et dans le domaine de la détergence.

Mais la présente invention sera plus aisément comprise à l'aide des exemples suivants donnés à titre illustratif mais nullement limitatif.

L'installation utilisée est schématisée à la figure en annexe.

Elle comprend une tête de dispersion 1, un bicône de réception 2 et un cyclone 3.

La tête présents un panier perforé 4 définissant un espace annulaire 9 dans lequel débouche une entrée tangentielle 5. Cet espace permet de réaliser l'écoulement puits-tourbillon symétrique grâce à des orifices tels que 6 et au col 7.

La phase à traiter est introduite par un conduit axial 8 de manière à la conduire jusque dans la zone de dépression du puits-tourbillon c'est-à-dire dans la partie amont du bicône 2.

Les gaz de traitement sont amenés chauds dans l'espace annulaire.

Exemple 1

Cet exemple a pour but de mettre en évidence l'intérêt du procédé selon l'invention pour la préparation de TPP sans insoluble.

Une solution contenant 20,5% $P_2O_5$ et 14,9 % $Na_2O$ (Na/P=1,664) est pulvérisée dans un courant d'air chauffé à 880°C ayant un débit de 50 Nm3/h. Le débit de la solution est ajusté de façon à obtenir une température de sortie des gaz et du produit de 405—420°C.

Le taux de transformation en TPP est de 97% et le taux d'insolubles est inférieur à 0,01 %.

Dans un procédé classique (flamme ou four tournant), la calcination d'une solution de même rapport Na/P à une même température conduit à un mélange TPP 95%—insolubles—3%—pryoneutre 2%.

Le taux d'insolubles est mesuré par la méthode suivant: 20 g de produit sont dissous dans 400 $cm^3$ d'eau et portés à ébullition pendant 10 mn. La solution est filtrée après refroidissement sur fritté n° 4 préalablement séché deux heures à 110°C. Le fritté contenant le précipité éventuel lavé est séché deux heures à 110°C. La différence de poids du fritté avant et après séparation permet de calculer le taux d'insolubles.

Exemple 2: Influence des divers facteurs sur le TPP.

Les conditions de préparation des TPP sont les suivantes: la solution est obtenue par neutralisation de $H_3PO_4$ par NaOH de telle façon que l'on ait un rapport $Na_2O/P_2O_5$ compris entre 1,64 et 1,70 et un extrait sec compris entre 15 et 50%. Les gaz chauds sont introduits à une température comprise entre 880 et 950°C.

Les réglages de débit d'air (de l'ordre de 50 $Nm^3/h$ dans les essais effectués) et de solution permettent de réaliser une zone isotherme compris avantageusement entre 390 et 450°C correspondant à la température du produit calciné (TPP).

| Essais | $Na_2O$ % | $P_2O_5$ % | Na/P* | Extrait sec % | $T_e$ entree gaz °C | $T_s$ sortie gaz °C | Phase I % | Densité appar. |
|---|---|---|---|---|---|---|---|---|
| 0 | 15,3 | 21,0 | 1,667 | 42 | 880 | 420 | 18 | 0,9 |
| Influence du rapport Na/P | | | | | | | | |
| 1 | 16,3 | 22,2 | 1,68 | 42 | 880 | 390 | 19 | 0,7 |
| 2 | 14,1 | 19,6 | 1,65 | 42 | 880 | 450 | 18 | 1,1 |
| Influence du taux d'extrait sec de la solution initiale | | | | | | | | |
| 3 | 14,1 | 19,6 | 1,65 | 15 | 950 | 420 | 28 | 0,7 |
| 4 | 14,1 | 19,6 | 1,65 | 42 | 880 | 450 | 18 | 1,1 |
| Influence de la température de calcination (température de sortie) | | | | | | | | |
| 5 | 14,1 | 19,6 | 1,65 | 42 | 880 | 400 | 37 | 0,8 |
| 6 | 14,1 | 19,6 | 1,65 | 42 | 880 | 420 | 18 | 1,1 |
| 7 | 16,3 | 22,2 | 1,68 | 42 | 880 | 390 | 19 | 0,7 |
| 8 | 16,3 | 22,2 | 1,68 | 42 | 880 | 450 | 18 | 0,8 |

* valeur à 0,005 près

| Essais | %TPP |
|---|---|
| 0 | >98% |
| 1 | >92% |
| 2 | >90% |

On obtient du TPP sans aucune impureté phosphatée si le rapport est bien ajusté à 5/3. On aboutit à un mélange TPP+pyroacide ou TPP+pyroneutre *exclusivement* si le rapport Na/P est mal ajusté. Ainsi le taux de TPP obtenu est voisin de 90% dans l'exemple n° 6 et supérieur à 98% lorsque $T_s$=420°C et Na/P=5/3 (essai O).

Par ailleurs, les TPP obtenus selon les essais 1 à 8 ne présentant pas d'insolubles.

On doit remarquer en particulier qu'un TPP selon l'essai 5, à 37% de phase I, ne conduit à aucune prise en masse selon le test décrit ci-après, avec une perte en eau à 150°C inférieure à 0,05%.

Dans les mêmes conditions, selon un procédé de l'art antérieur, un TPP anhydre et de même taux en phase I conduit à une prise en masse très important.

Un TPP de taux de phase I moitié du précédent selon l'essai 7 ne conduit à aucune prise en masse au cours du temps, alors qu'un TPP anhydre (c'est-à-dire de même perte en eau à 150°C) de même taux de phase I selon l'art antérieur, prend en masse.

Les exemples précédents montrent donc que le TPP selon l'invention, est nouveau et présente un comportement différent des produits qui entrent sous cette dénomination. Il s'agit là d'un effet surprenant et qui ne pouvait être prévu.

**Revendications**

1. Tripolyphosphate de sodium anhydre, de rapport Na/P égal à 1,667 ± 0,01, de perte en eau inférieure à 0,6 % à 150°C et de préférence inférieure à 0,02 %, caractérisé par le fait qu'il présente une densité apparente comprise entre 0,5 et 1,1, une taille moyenne des agglomérats inférieure à 100 μm, un taux de phase 1 compris entre 15 et 60%, qu'il ne contient pas d'insolubles, et qu'il présente une prise en masse nulle en milieu non agité, cette prise en masse étant estimée lors de l'addition de 7 g dudit tripolyphosphate dans 20 ml d'eau distillée.

2. Procédé pour l'obtention du TPP selon la revendication 1, caractérisé par le fait que:

— on prépare une solution de phosphates alcalins de rapport Na/P compris entre 1,64 et 1,70, en ajustant le rapport à la valeur du rapport Na/P dans le produit final,
— on forme un écoulement puits-tourbillon symétrique avec une phase gazeuse chaude et l'on introduit la solution selon l'axe dudit écoulement dans la zone de dépression de ce dernier
— on impartit audit écoulement puits-tourbillon symétrique une quantité de mouvement par rapport à la quantité de mouvement de la phase liquide, suffisante pour provoquer la dispersion et le transfert thermique, dans une zone piston,
— on confère à la phase gazeuse une température suffisante pour créer une zone isotherme à la sortie de la zone piston, où a lieu pratiquement tout le transfert thermique entre phases dans la zone d'avancement piston, créée par l'écoulement puits,
— on laisse la réaction se poursuivre dans ladite zone isothermique,
— on recueille le produit obtenu,

le rapport des quantités de mouvement entre les phases gazeuse et liquide étant compris entre 1000 et 10000, les valeurs d'introduction de la solution de départ étant inférieures à 10 m/sec et ladite solution comprenant entre 15 et 50% d'extrait sec, la pression sur la phase gazeuse étant comprise entre 0,4 et 0,6 $10^5$ Pa et la température dans la zone isotherme étant comprise dans l'intervalle 380—450°C.

**Patentansprüche**

1. Wasserfreies Natriumtripolyphosphat mit einem Na/P-Verhältnis von 1,667±0,01, einem Wasserverlust von weniger als 0,6 % bei 150°C, vorzugsweise von weniger als 0,02 %, dadurch gekennzeichnet, daß es eine Schüttdichte von 0,5 bis 1,1 einen mitteren Durchmesser der Agglomerate unter 100 μm und einen Anteil an Phase 1 von 15 bis 60 % aufweist, keine unlöslichen Anteile enthäle und in einem nicht-gerührten Medium nicht fest wird, wobei dieses Festwerden bei der Zugabe von 7 g dieses Tripolyphosphats zu 20 ml destilliertem Wasser bewertet wird.

2. Verfahren zur Herstellung des TPP nach Anspruch 1, dadurch gekennzeichnet, daß man:

— eine Lösung aus Alkaliphosphaten mit einem Na/P-Verhältnis von 1,64 bis 1,70 herstellt, indem man das Verhältnis dem Wert des Na/P-Verhältnisses im Endprodukt anpaßt,
— eine symmetrische schraubenförmige, sich verengende Strömung mit einer Heißgasphase erzeugt und die Lösung entlang der Achse dieser Strömung in deren Unterdruckzone einführt,
— der symmetrischen schraubenförmigen, sich verengenden Strömung eine Bewegungsgröße, bezogen auf die Bewegungsgröße der flüssigen Phase erteilt, die ausreicht, um in einer Kolbenzone die Dispersion und den Wärmeübergang zu bewirken,
— der Gasphase eine ausreichende Temperatur erteilt, um am Ausgang der Kolbenzone eine isotherme Zone zu erzeugen, in der praktisch der gesamte Wärmeübergang zwischen den Phasen in der sich vorwärts bewegenden Kolben (strömungs) zone, die durch die schraubenförmige Strömung erzeugt ist, erfolgt,
— in der isotherm Zone die Reaktion ablaufen läßt und
— das erhaltene Produkt isoliert,

wobei das Verhältnis der Bewegungsgrößen zwischen der Gasphase und der flüssigen Phase 1000 bis 10 000 beträgt, die Werte für das Einbringen der Ausgangslösung <10 m/Sekunde sind und die Lösung 15 bis 50 % Feststoffe enthält, der Druck auf die Gasphase 0,4 bis $0,6 \times 10^5$ Pa und die Temperatur in der isothermen Zone 380 bis 450°C beträgt.

## Claims

1. Anhydrous sodium tripolyphosphate with an Na/P ratio equal to $1.667 \pm 0.01$, and with a water loss of less than 0.6% at 150°C and preferably less than 0.02%, characterised in that it has an apparent relative density of between 0.5 and 1.1, a mean size of the agglomerates of less than 100 µm, a proportion of phase 1 of between 15 and 60%, that it does not contain insoluble matter, and that it exhibits zero solidification in a non-agitated medium, said solidification being assessed upon the addition of 7g of said tripolyphosphate to 20 ml of distilled water.

2. A process for producing the TPP according to claim 1 characterised by:

preparing a solution of alkaline phosphates with an Na/P ratio of between 1.64 and 1.70, adjusting the ratio to the value of the Na/P ratio in the final product,

forming a symmetrical axial flow-vortex flow configuration with a hot gaseous phase and introducing the solution along the axis of said flow configuration into the depression zone thereof,

imparting to said symmetrical axial flow-vortex flow configuration an amount of momentum with respect to the momentum of the liquid phase, which is sufficient to cause dispersion and heat transfer, in a plugflow zone,

bringing the gaseous phase to a sufficient temperature to create an isothermal zone at the discharge from the plug-flow zone, where virtually all the heat transfer between phases takes place, in the plug-flow zone, created by the axial flow,

allowing the reaction to continue in said isothermal zone, and

collecting the product obtained,

the ratio in regard to the levels of momentum as between the gaseous and liquid phases being between 1000 and 10000, the values for introduction of the starting solution being lower than 10 m/sec and said solution comprising between 15 and 50% of dry extract, the pressure on the gaseous phase being between 0.4 and 0.6 $10^5$ Pa and the temperature in the isothermal zone being in the range of 380 to 450°C.

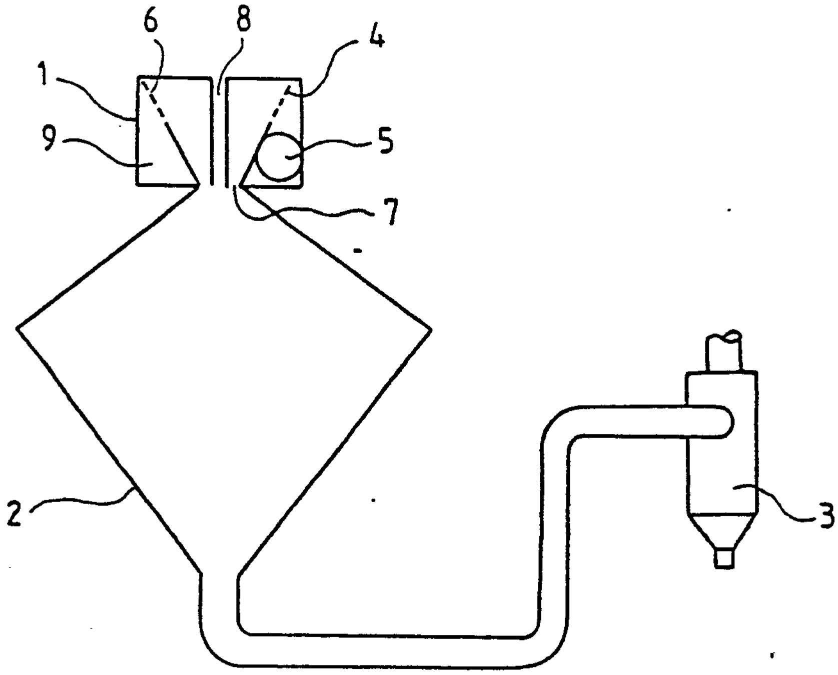
6
8
4
1
9
5
7
2
3